# FASCICULE DE BREVET EUROPEEN

(11) **EP 2 529 517 B1**
(45) Date de publication et mention de la délivrance du brevet: **16.04.2014**
(21) Numéro de dépôt: 11704273.9
(22) Date de dépôt: 11.01.2011
(51) Int. Cl.: H04L 29/08

(54) **DISPOSITIF DE COMMUTATION ET DE ROUTAGE MODULABLE**
VORRICHTUNG ZUM VERMITTELN UND SKALIERBAREN ROUTEN
DEVICE FOR SWITCHING AND SCALABLE ROUTING

(30) Priorité: 29.01.2010 FR 1000368
(43) Date de publication de la demande: 05.12.2012
(73) Titulaire: LYaTiss, 69004 Lyon (FR)
(72) Inventeur: VICAT-BLANC-PRIMET, Pascale, 94131 San Francisco (CA); ANHALT, Fabienne, F-69100 Villeurbanne (FR)
(74) Mandataire: Blot, Philippe Robert Emile
(86) Numéro de dépôt international: PCT/FR2011/050041
(87) Numéro de publication internationale: WO 2011/092410

(56) Documents cités:
- WO-A1-2008/093174
- US-A1- 2008 285 578

## Description

L'invention concerne un équipement de commutation et/ou de routage de données numériques à usage dans les réseaux de communication dans lesquels les données sont échangées sous forme de paquets.

Les réseaux de communication de ce type comprennent les réseaux fonctionnant sur la base du protocole Internet, ou réseaux IP.

Les équipements de commutation/routage sont largement utilisés dans ces réseaux. Ils sont capables d'aiguiller des paquets de données reçus à leurs ports d'entrée vers l'un de leurs ports de sortie, conformément à des règles prédéfinies de routage ou de commutation. Ces équipements sont en outre capables d'appliquer des règles de gestion concernant ces paquets de données, et d'obéir à des commandes ou à un programme de configuration automatique.

De tels équipements sont connus pour posséder des capacités de commutation élevées - ils peuvent commuter/router de grandes quantités de données par unité de temps - mais une capacité limitée pour le traitement de ces données.

Depuis longtemps, les gestionnaires de réseaux de communication cherchent à en améliorer la flexibilité.

De base, la configuration d'un réseau de communication est fixée, dans une large mesure au moins. Cette configuration s'appuie sur l'installation et le paramétrage d'éléments de transmission de données, en particulier des routeurs/commutateurs, qui devraient être redéployés et/ou reparamétrés dans le cas d'une reconfiguration du réseau.

Ce besoin de flexibilité s'est récemment accru avec l'apparition des réseaux dits virtuels, composés de ressources mises à disposition sur demande et pour une durée de temps déterminée. Une application particulière des réseaux virtuels concerne le concept IAAS, pour "Infrastructure As a Service", ou "l'infrastructure en tant que service" en français.

Autrement dit, on cherche à modifier facilement et de façon temporaire l'infrastructure de son réseau afin de l'adapter à ses besoins du moment. On cherche en particulier à faire cohabiter, dans ce réseau, plusieurs réseaux logiques isolés de manière simultanée.

Dans ce but, plusieurs acteurs du domaine ont récemment proposé des améliorations aux routeurs classiques.

Dans "Intelligent logical router service", M. KOLON, Technical report 200097-001, Juniper Networks, octobre 2004, est décrit un routeur physique capable d'héberger plusieurs routeurs logiques, lesquels se partagent les ports du routeur physique et possèdent leurs propres tables de routage. La flexibilité de ce type de routeurs est limitée à la seule l'opération de routage.

Dans *"*Control plane scaling and routeur virtualization", Technical report 2000261-001, Juniper Networks, février 2009, et "Router virtualization in service providers", Technical report, Cisco Systems, sont proposés des modèles de routeurs virtuels mis en oeuvre dans un même équipement physique. Les routeurs virtuels se partagent alors les ressources physiques de l'équipement. Chaque port d'entrée, ou de sortie, est utilisé par un unique routeur virtuel, toujours le même. Cette technique ne permet pas d'héberger un nombre important de routeurs virtuels dans un même routeur physique car alors un nombre très important de ports devraient être prévus (surdimensionnement).

D'autre part, la société Cisco Systems propose des équipements de routage qui implémentent plusieurs routeurs virtuels aux fins de redondance en cas de défaillance. Dans ce cas, les routeurs virtuels présentent tous une configuration identique.

Outre les équipements évoqués ci-dessus, on connaît également les routeurs dits logiciels, par exemple ceux proposés dans *"*Fairness issues in software virtual routiers", N. EGI, A. GREENHALGH, M. HANDLEY, M. HOERDT, F. HUICI, et L. MATHY, dans PRESTO'08: Proceedings of the ACM workshop on programmable routers for extensible services of tomorrow, New York, NY, USA, pages 33-38, ACM, 2008. Ces routeurs logiciels offrent une grande flexibilité de configuration. Cependant, les routeurs de ce type présentent des performances de routage très faibles en comparaison des équipements physiques dédiés. Ces limites ne leur permettent de proposer qu'une virtualisation du routage (niveau 3 du protocole IP) et aucune virtualisation du plan de données (niveau 2 du commutateur). Finalement, les routeurs logiciels sont surtout utilisés aux fins d'expérimentation, comme décrit dans *"*A Platform for High Performance and Flexible Virtual Routers on Commodity Hardware", N. EGI, A. GREENHALGH, M. HOERDT, F. HUICI, F. PAPADIMITRIOU, M. HANDLEY, et L. MATHY, SIGCOMM 2009 poster session, août 2009*,* à cause de leurs piètres performances en production.

L'invention cherche à améliorer la situation. L'équipement proposé vise un dispositif de transmission de données numériques du type comprenant au moins un port d'entrée et des ports de sortie destinés à respectivement recevoir et délivrer des paquets de données, une matrice d'interconnexion reliant chaque port d'entrée à chacun des ports de sortie par l'intermédiaire d'une mémoire tampon respective, un contrôleur pour la gestion des paquets de données à travers la matrice de commutation, des ordonnanceurs de paquets organisant la délivrance des paquets de données en un port de sortie respectif, remarquable en ce que le contrôleur est un ensemble contrôleur qui maintient une structure de stockage de règles de gestion, y compris des règles de commutation/routage, en relation avec des identifiants de gestion, et comprend en outre un gestionnaire de file respectif pour chacun des ports d'entrée, chaque gestionnaire de file étant adapté pour, à chaque fois qu'un paquet de données est reçu à son port d'entrée respectif, déterminer une valeur d'identifiant de gestion pour ce paquet, interroger ladite structure de stockage avec ladite valeur d'identifiant de gestion pour déterminer le port de sortie du paquet, évaluer une condition de gestion portant sur le contenu du paquet de données et tirée des règles de gestion, et, en fonction du résultat de cette évaluation, associer le paquet de donnée à une file d'attente organisée dans la mémoire tampon correspondant au port de sortie dudit paquet en relation avec l'identifiant de gestion, et en ce que chaque ordonnanceur est adapté pour délivrer les paquets de données en son port de sortie respectif dans un ordre déterminé d'après l'évaluation d'une condition de gestion supplémentaire, tirée des règles de gestion, prenant en compte la valeur de l'identifiant de gestion associé à chacun des paquets des données à délivrer.

Un routeur/commutateur de ce type permet le fonctionnement simultané de plusieurs commutateurs, que l'on peut qualifier de virtuels, sur la base d'un unique équipement physique de routage/commutation. Chacun de ces commutateurs virtuels présente une configuration qui lui est propre (nombre de ports, capacité de chacun de ces ports, taille des mémoires tampons, règles de routage/commutation, fonctionnement des ordonnanceurs des ports de sortie), laquelle peut différer de la configuration des autres routeurs virtuels s'exécutant au sein du même équipement.

Un tel équipement permet aux fournisseurs d'infrastructure réseau d'exploiter au mieux les ressources dont ils disposent. Il offre également de la flexibilité à l'opérateur de réseaux virtuels, puisque ce dernier peut désormais composer des réseaux virtuels à la demande, en louant des commutateurs/routeurs virtuels composables à la demande pour une période de temps choisie.

En allouant des commutateurs/routeurs virtuels, l'opérateur de réseau peut attribuer à chacun de ses clients un réseau virtuel qui lui est propre. L'infrastructure réseau sous-jacente se trouve ainsi séparée en plusieurs réseaux virtuels privés, ou VPN ("Virtual Private Network" en anglais), indépendants les uns des autres, et dont les caractéristiques fonctionnelles (bande-passante, latence, qualité de service, routage et autres) peuvent être paramétrées et configurées indépendamment les unes des autres.

Comme la création des différents routeurs virtuels est réalisée par des opérations sur les paquets de données eux-même, directement, (niveau 2 du modèle OSI), on obtient une bonne isolation de ces différents routeurs. Ceci offre en particulier des garanties de bande-passante et de latence aux utilisateurs. Pour ces derniers, tout se passe comme s'ils disposaient de commutateurs/routeurs réels distincts.

Les ressources de l'équipement physique, telles que ses mémoires tampons, ses capacités de traitement, la capacité de ses ports, par exemple, sont virtuellement partagées au niveau le plus bas de cet équipement, directement dans l'ensemble contrôleur de la matrice d'interconnexion. Il en résulte d'excellentes performances, en termes de débit notamment.

Chaque routeur virtuel peut être défini individuellement, en stipulant le nombre de ses ports, la capacité de chacun de ces ports, la politique d'ordonnancement des paquets aux ports de sortie, ainsi que les différentes règles de priorité, de routage et/ou de commutation. Cette définition peut être commandée à distance et être redéfinie à la demande.

Des caractéristiques additionnelles, complémentaires ou de substitution, sont énoncées ci-après:
- La condition de gestion porte également sur le contenu des paquets de données stockés dans la file d'attente correspondante au port de sortie du paquet en association avec la valeur de l'identifiant de gestion du paquet en question.
- L'évaluation de la condition de gestion comprend une comparaison du contenu desdits paquets de données stockés et dudit paquet à une valeur-seuil associée à l'identifiant de gestion desdits paquets de données stockés et dudit paquet.
- La condition de gestion porte au moins en partie sur une taille du paquet de données.
- Chaque gestionnaire de files est adapté pour maintenir dans chacune des mémoires tampon associées à son port d'entrée une file d'attente respective pour les paquets de données ayant une même valeur d'identifiant de gestion.
- Chaque gestionnaire de files maintient autant de files d'attente que de valeurs d'identifiant de gestion différentes susceptibles d'être attribuées à un paquet reçu au port d'entrée associé à ce gestionnaire de files.
- Ledit paquet de données est stocké avec un rang de sortie relatif, déterminé en application de règles de priorité stockées par l'ensemble contrôleur en relation avec la valeur de l'identifiant de gestion dudit paquet de données.
- Chaque ordonnanceur est adapté pour délivrer les paquets de données indépendamment de la file d'attente dans laquelle sont stockés les paquets de données.
- Chaque ordonnanceur est adapté pour, une fois déterminée la valeur de l'identifiant de gestion du paquet à délivrer, délivrer un paquet de l'une des files d'attentes correspondantes, en application de règles de priorités, maintenues en relation avec cette valeur de l'identifiant de gestion.
- Chaque ordonnanceur est adapté pour déterminer la valeur de l'identifiant de gestion du paquet à délivrer en application de règles de priorité prédéfinies.
- L'ensemble contrôleur exécute un ordonnanceur général déterminant, pour chacun des ordonnanceurs de paquet, la valeur de l'identifiant de gestion du paquet à délivrer, en application de règles de priorité prédéfinies.
- L'évaluation de ladite condition de gestion et/ou de ladite condition de gestion supplémentaire comprend l'évaluation, pour l'identifiant de gestion en question, de l'une au moins des grandeurs du groupe formé d'une taille cumulée de paquets traités, une taille cumulée de paquets traités par unité de temps, un nombre de paquets traités et un nombre de paquets traités par unité de temps.
- Le contrôleur maintient un ensemble de règles de priorité pour la délivrance de paquets de données appartenant à des files d'attentes différentes, et chaque ordonnanceur de paquet est agencé pour évaluer l'une de ces règles, après détermination de la valeur de l'identifiant de gestion du paquet à délivrer, en application des règles de gestion maintenues en relation avec cette valeur de l'identifiant de gestion.
- L'ensemble contrôleur comprend une pluralité de contrôleurs, chacun de ces contrôleur étant associé à l'un, respectif, des ports d'entrée.

On propose également un procédé de transmission de données numériques comprenant les étapes suivantes:
- recevoir des paquet de données en au moins un port d'entrée,
- identifier un port de sortie respectif pour chaque paquet de données en application de règles de gestion prédéterminées,
- placer chaque paquet de données dans une file d'attente maintenue entre le port d'entrée et le port de sortie identifié à l'étape précédente,
- délivrer, en chacun des ports de sortie, les paquets de données des files d'attentes reliées à ce port de sortie, de manière organisée selon un ordre prédéterminé, remarquable en ce que l'étape d'identification du port de sortie respectif comprend les étapes suivantes:
- déterminer une valeur d'identifiant de gestion respectif pour chaque paquet de données,
- appliquer des règles de gestion, y compris des règles de commutation/routage, relatives à l'identifiant de gestion déterminé à l'étape précédente,
et en ce que l'étape de placement de chaque paquet de données dans une file d'attente comprend les étapes suivantes:
- évaluer, pour chaque paquet de données, une condition de gestion portant sur le contenu de ce paquet de données et tirée des règles de gestion relatives à son identifiant de gestion,
- associer, en fonction du résultat de l'évaluation de l'étape précédente, le paquet de donnée à une file d'attente organisée dans la mémoire tampon correspondant au port de sortie en relation avec l'identifiant de gestion,
et en ce que l'étape de délivrance des paquets comprend les étapes suivantes:
- évaluer, pour chacun des paquets des données à délivrer, une condition de gestion supplémentaire, tirée des règles de gestion, prenant en compte la valeur de l'identifiant de gestion,
- déterminer un ordre de sortie respectif des desdits paquets de données d'après l'évaluation de l'étape précédente.

D'autres caractéristiques et avantages de l'invention apparaîtront à la lumière de la description détaillée ci-après, et des dessins annexés sur lesquels :
- La figure 1 est un schéma fonctionnel illustrant un équipement de routage,
- la figure 2 est un schéma fonctionnel représentant une partie de l'équipement de la figure 1,
- la figure 3 est un ordinogramme illustrant le fonctionnement d'un gestionnaire de files d'attente pour l'équipement de la figure 1,
- la figure 4 est un ordinogramme illustrant le fonctionnement d'un ordonnanceur de paquets pour l'équipement de la figure 1,
- la figure 5 est un ordinogramme détaillant l'opération 308 de la figure 3,
- la figure 6 est un ordinogramme détaillant l'opération 406 de la figure 4, selon une première variante de réalisation,
- la figure 7 est un ordinogramme détaillant l'opération 406 de la figure 4, selon une seconde variante de réalisation,
- la figure 8 est un ordinogramme illustrant le fonctionnement du gestionnaire de files d'attente pour l'équipement de la figure 1 dans une variante de réalisation,
- la figure 9 est un schéma fonctionnel illustrant un équipement de routage selon une première configuration, et
- la figure 10 est un schéma fonctionnel illustrant un équipement de routage selon une seconde configuration.

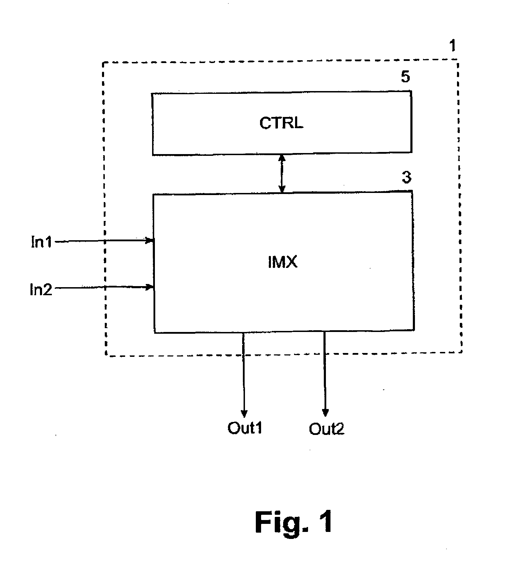

La figure 1 illustre un équipement de routage, ou routeur 1, à usage dans des réseaux informatiques au travers desquels des données numériques circulent sous forme de paquets, comme c'est le cas, par exemple, des réseaux dits "IP" (pour "Internet Protocol" ou protocole Internet en français).

Le routeur 1 comprend des ports dits d'entrée, ici un premier port d'entrée In1 et un second port d'entrée In2, pouvant être connectés à un ou plusieurs réseaux IP de manière à recevoir des paquets de données. Aux fins d'illustration uniquement, on suppose ici que les paquets de données reçus au premier port d'entrée In1 peuvent provenir de deux réseaux virtuels différents, notés VNET1 et VNET 2 respectivement, tandis que les paquets de données reçus au second port d'entrée In2 peuvent provenir du réseau virtuel VNET1 ou d'un autre réseau virtuel, noté VNET3. Ces réseaux virtuels peuvent être mis en oeuvre grâce à la technologie VLAN (pour virtual local area network, ou réseau virtuel local en français) ou MPLS (pour "multiprotocol label switching", ou commutation d'étiquettes multiprotocoles en français).

Le routeur 1 comprend encore des ports dits de sortie, ici un premier port de sortie Out1 et un second port de sortie Out2, pouvant être connectés à un ou plusieurs réseaux IP de manière à délivrer des paquets de données, par exemple aux réseaux VNET1 et VNET2.

Le routeur 1 comprend également une matrice d'interconnexion IMX 3, laquelle relie chaque port d'entrée à chacun des ports de sortie avec possibilité de transmission de paquets.

Le routeur 1 comprend enfin un bloc fonctionnel désigné ensemble contrôleur CTRL 5, interagissant avec la matrice IMX 3 pour gérer la circulation des paquets de données des ports d'entrée jusqu'aux différents ports de sortie selon des règles prédéfinies. En particulier, l'ensemble contrôleur CTRL 5 fait en sorte qu'un paquet de données arrivant en un port d'entrée soit délivré en l'un ou l'autre des ports de sortie, en application de règles dites de "routages" prédéfinies.

L'ensemble contrôleur CTRL 5 gère ainsi le routage des paquets de données à proprement parler, lequel implique un aiguillage (commutation) des paquets entre un port d'entrée et l'un des ports de sortie, en fonction de sa destination et/ou de son chemin, et l'organisation temporelle du cheminement des paquets au travers de la matrice IMX 3, en particulier la priorité relative des paquets, l'attribution d'une date de délivrance ou autre, suivant des règles également prédéfinies.

Bien que la présente description fasse référence à un routeur en tant que dispositif de transmission de données en paquets de niveau 3 du modèle OSI, l'invention n'est nullement limitée à cet exemple et s'applique à bien d'autres dispositifs de transmission, en particulier les équipements de commutation de données en paquets, ou commutateur.

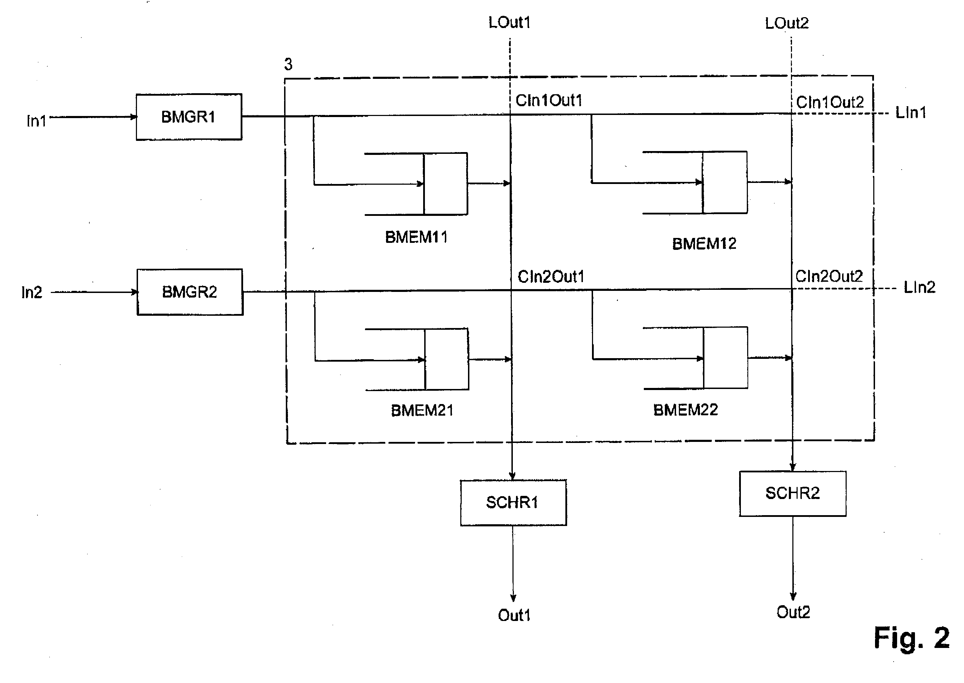

La figure 2 montre plus en détail la matrice IMX 3 du routeur 1.

La matrice IMX 3 comprend une première ligne d'entrée LIn 1, reliée au premier port d'entrée In1, une seconde ligne d'entrée LIn2, reliée au second port d'entrée In2, une première ligne de sortie LOut1, reliée au premier port de sortie Out1 et une seconde ligne de sortie LOut2, reliée au second port de sortie Out2.

Chacune des première et seconde lignes de sortie LOut1 et LOut2 est interconnectée à la fois à la première ligne d'entrée LIn1 en un premier point CIn1out1, respectivement CIn2Out1, et à la seconde ligne d'entrée LIn2 en un second point CIn2Out1, respectivement CIn2Out2.

La matrice IMX 3 comprend encore de la mémoire vive organisée en une pluralité de mémoires tampons, respectivement disposées aux points d'interconnexion de cette matrice. Ici, la matrice IMX 3 comprend une mémoire tampon BMEM11 au point CIn1Out1, une mémoire BMEM12 au point CIn1Out2, une mémoire BMEM21 au point CIn2Out1 et une mémoire BMEM22 au point CIn2Out2.

Chacune des lignes d'entrée est contrôlée par un gestionnaire de file respectif adapté pour, entre autres choses, organiser une file d'attente pour des paquets de données dans chacune des mémoires tampons disposées sur la ligne qu'il gère.

Dans l'exemple de la figure 2, un premier gestionnaire de file BMGR1 contrôle la ligne LIn1 en organisant une file d'attente dans la mémoire BMEM11 et une autre file d'attente dans la mémoire BMEM12 pour les paquets de données reçus au port In1, tandis qu'un second gestionnaire de file BMGR2, en charge de la ligne LIn2, organise une file d'attente dans la mémoire BMEM21 et une autre file d'attente dans la mémoire BMEM22 pour les paquets reçus au second port d'entrée In2.

La structure du routeur 1 s'apparente à une structure dite "à files d'attente aux points d'interconnexion", laquelle structure est par exemple décrite dans *"*The crosspoint-queued switch", J. KANIZO et D. HAY, dans IEEE INFOCOM 2009, 2009*.*

En outre, chaque gestionnaire de file s'occupe du stockage des paquets de données reçus au port d'entrée de sa ligne dans l'une des différentes files d'attente qu'il organise, en application de règles de commutation/routage prédéfinies.

Ici, par exemple, le premier gestionnaire BMGR1 assure le stockage des paquets de données reçus au port In1 soit dans la file de la mémoire BMEM11 soit dans la file de la mémoire BMEM12, selon des règles de commutation/routage qui lui sont propres.

Chacune des lignes de sortie est contrôlée par un ordonnanceur de paquets respectif, lequel organise la délivrance des paquets de données contenus dans les files d'attente des mémoires qui se trouvent sur la ligne qu'il gère, en application de règles d'ordonnancement prédéfinies.

En l'espèce, un premier ordonnanceur SCHR1 contrôle la ligne LOut1 et organise la délivrance au premier port de sortie Out1 des paquets de données contenus dans les files d'attentes des mémoires BMEM11 et BMEM22, tandis qu'un second ordonnanceur SCHR2, en charge de la ligne LOut2, organise la délivrance des paquets de données maintenus dans les files d'attente des mémoires BMEM12 et BMEM22 au second port de sortie Out2.

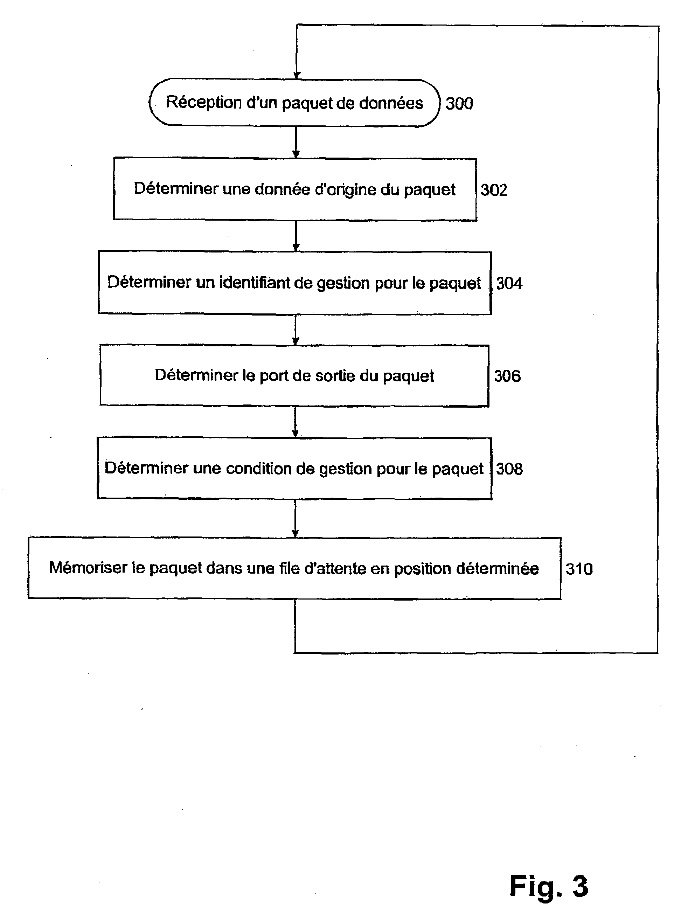

La figure 3 illustre le fonctionnement d'un gestionnaire de file, par exemple le premier gestionnaire BMGR1.

À l'opération 300, un paquet de données est reçu au port d'entré de la ligne contrôlée par le gestionnaire de file en question, ici le port In1.

À l'opération 302, on récupère une donnée caractérisant l'origine du paquet reçu à l'opération 300, c'est-à-dire identifiant le réseau virtuel dont provient ce paquet. Ici, les paquets reçus au port In1 peuvent provenir des réseaux VNET1 ou VNET2. La donnée d'origine se trouve contenue dans le paquet lui-même.

Le réseau virtuel d'origine peut être identifié par différentes données, telles qu'une adresse IP d'origine, une adresse IP de destination, une étiquette de VLAN, une étiquette de service, ou autres. Cette donnée d'origine du paquet peut se trouver dans l'en-tête de ce paquet, mais aussi dans un en-tête supplémentaire, le cas échéant. La donnée d'origine peut également être déduite de toute combinaison de données et d'en-tête susceptibles d'identifier le réseau virtuel d'origine conformément à des règles, en particulier de correspondance, définies dans l'ensemble contrôleur 5.

À l'opération 304, on établit une donnée d'identifiant de gestion pour le paquet. Cet identifiant détermine le traitement du paquet dans le routeur 1. L'identifiant de gestion est établi en correspondance de l'identifiant d'origine du paquet. Une table de gestion peut être organisée par l'ensemble contrôleur 5, laquelle maintient une relation entre chaque valeur d'identifiant d'origine et une valeur d'identifiant de gestion. Par exemple, cette table associe la valeur VNET1 de l'identifiant d'origine à une valeur VS1 de l'identifiant de gestion, et une valeur VS2 à la valeur VNET2 de l'identifiant d'origine.

L'opération 304 implique alors le parcours de la table de gestion en question.

L'identifiant de gestion vaut pointeur vers un ensemble de règles prédéfinies déterminant la gestion du paquet de données dans le routeur 1. Ces règles comprennent en particulier des règles de routage et/ou de commutation pour les paquets de données, y compris une ou plusieurs tables de routage. Ces règles sont maintenues par l'ensemble contrôleur 5 dans la mémoire du routeur 1, en relation avec une valeur d'identifiant de gestion.

Autrement dit, l'ensemble contrôleur 5 maintient plusieurs tables de routage différentes, à chaque fois associées à une valeur différente de l'identifiant de gestion. Ici, l'ensemble contrôleur 5 maintient une table de routage en relation avec l'identifiant VS1, désignée RT1, et une table de routage différente, notée RT2, en relation avec l'identifiant VS2.

Dans certains cas, en particulier lorsque l'origine des paquets de données est établie à partir d'un identifiant de réseau internet, la valeur de la donnée d'origine peut être prise en tant qu'identifiant de gestion. Ceci revient à maintenir les règles de gestion en correspondance des identifiants de réseau virtuel dans l'ensemble 5.

À l'opération 306, on détermine le port de sortie du paquet de données en application des règles de routage maintenues dans l'ensemble contrôleur 5 en relation avec la valeur de l'identifiant de gestion déterminée à l'opération 304.

Cette opération 306 implique un parcours d'une table de routage pour déterminer sur lequel des ports de sortie du routeur 1 le paquet de données doit être délivré. Ici, l'opération 306 implique de déterminer si le paquet de données en question doit être délivré au premier port de sortie Out1 ou au second port de sortie Out2.

À l'opération 308, on évalue une ou plusieurs conditions sur le paquet de données en relation avec l'identifiant de gestion qui lui est associé.

Ces conditions déterminent la façon dont le paquet de données va être stocké dans l'une des files d'attente contrôlées par le gestionnaire de file. Ces conditions sont évaluées en application de règles de gestions prédéterminées, maintenues dans l'ensemble contrôleur 5, dont certaines peuvent être propres à la valeur de l'identifiant de gestion.

Cette opération 308, qui sera détaillée plus loin, vise à déterminer si le paquet de données va être stocké ou non dans la mémoire tampon correspondant à son port de sortie, et la position relative de ce paquet de données dans la file d'attente maintenue dans cette mémoire par le gestionnaire de file.

À l'opération 310, on stocke le paquet de données dans la mémoire tampon correspondant au port de sortie déterminé à l'opération 306. Le paquet de données est associé à une file d'attente maintenue dans cette mémoire par le gestionnaire de file dans un ordre déterminé selon des règles de priorité prédéfinies.

Ces règles sont mémorisées par l'ensemble contrôleur 5 en relation avec une valeur d'identifiant de gestion. Ces règles de priorité peuvent dépendre de la condition évaluée à l'opération 308.

Selon une première variante de réalisation, le gestionnaire de file est adapté pour maintenir une unique file d'attente dans chacune des mémoires tampons de la ligne qu'il gère. Dans cette variante, le paquet de données est stocké dans la file d'attente de la mémoire reliée au port de sortie déterminé en correspondance avec la valeur de l'identifiant de gestion établi à l'opération 302. Les règles de routage déterminent alors directement le port de sortie physique du paquet de données.

Selon une seconde variante de réalisation, le gestionnaire de file maintient dans chacune des mémoires tampons qu'il gère autant de files d'attente qu'il existe de valeurs différentes d'identifiants de gestion. Chaque file d'attente correspond ainsi à une valeur de l'identifiant de gestion et à un port de sortie. Les paquets de données ne sont pas nécessairement mémorisés en correspondance avec leur valeur d'identifiant de gestion puisque l'identité de la file comprend cette information. Les règles de routage déterminent l'adresse de la file d'attente dans laquelle le paquet doit être stocké en fonction de la destination de ce paquet.

Dans chacune des première et seconde variantes de réalisation, les paquets de données sont sélectivement stockés dans l'une des mémoires tampons de la ligne contrôlée par le gestionnaire de file. La file d'attente à proprement parler peut être organisée sous la forme d'un tableau maintenant des pointeurs vers les paquets de données plutôt que les paquets eux-mêmes.

L'ordre du paquet est relatif à l'identifiant de gestion qui lui correspond. Autrement dit, il s'agit d'un ordre dans la file d'attente par rapport aux autres paquets de données (ou pointeurs vers ces données) stockés en correspondance de la même valeur d'identifiant de gestion. La notion d'ordre doit être prise ici dans un sens large, comme englobant tout moyen d'ordonner dans le temps les paquets de données, ou les pointeurs vers ces paquets. L'ordre en question peut se déduire du rang occupé par le paquet de données dans la file d'attente, d'une donnée d'ordre stockée en relation avec le paquet de données dans la file d'attente, ou encore d'une donnée de date associée à ce paquet dans cette file.

Le traitement recommence ensuite à l'étape 300, à la réception d'un nouveau paquet de données.

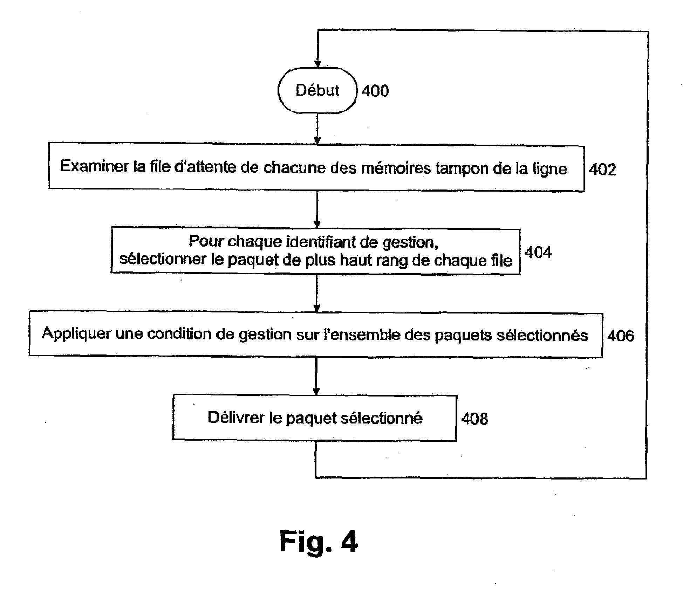

La figure 4 illustre en détail le fonctionnement d'un ordonnanceur de paquets, par exemple l'ordonnanceur SCHR1.

À l'opération 400, l'ordonnanceur débute son traitement. En pratique, l'ordonnanceur travaille à intervalles de temps réguliers ou est invoqué dès que le paquet précédent a été délivré sur un port de sortie. Dans le cas où toutes les files d'attente de sa ligne sont vides, l'ordonnanceur attend l'arrivée d'un paquet dans l'une quelconque des files d'attente de cette ligne.

À l'opération 402, l'ordonnanceur examine le contenu des files d'attente organisées dans les mémoires tampons reliées à la ligne qu'il contrôle. Ici, l'ordonnanceur SCHR1 examine les files d'attente organisées dans chacune des mémoires BEM11 et BEM21.

À l'opération 404, pour chacune des files d'attente, on détermine le paquet de plus haut rang associé à chacun des identifiants de gestion.

À l'opération 406, on applique une ou plusieurs conditions sur l'ensemble des paquets de plus haut rang, lesquelles dépendent de règles de gestion prédéfinies, mémorisées dans l'ensemble contrôleur 5. Certaines de ces règles de gestion peuvent être stockées en relation avec une valeur particulière d'identifiant de gestion. Autrement dit, les règles de gestion de l'opération 406 peuvent être en partie spécifiques au réseau virtuel dont provient le paquet de données. L'opération 406 vise à déterminer lequel des paquets présents dans les différentes files d'attente est le plus prioritaire, c'est-à-dire doit être délivré le premier.

À l'opération 408, on délivre le paquet de données sélectionné à l'opération 406.

Et l'ordonnanceur recommence le traitement en 400.

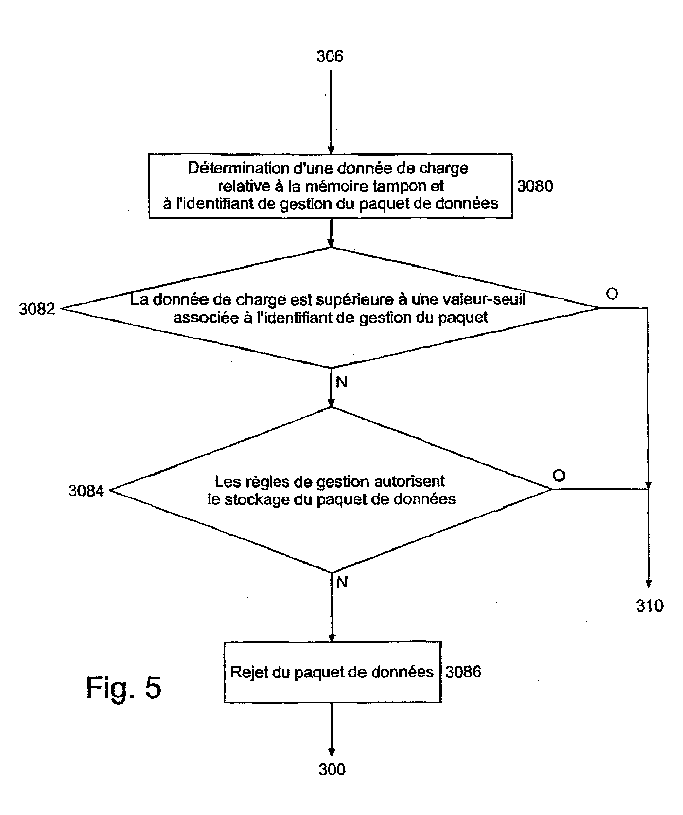

La figure 5 détaille l'opération 308 selon un mode de réalisation de l'invention.

À l'opération 3080, on établit une donnée de charge de la file d'attente destinée à recevoir le paquet de données. Cette donnée de charge est établie en prenant en compte les paquets de données de la file présentant la même valeur d'identifiant de gestion que le paquet en cours de traitement. La charge doit s'entendre ici dans un sens large et peut comprendre le nombre de pointeurs stockés en relation avec un identifiant de gestion particulier, le nombre de paquets de données, ou encore la taille cumulée de ces paquets de données.

À l'opération 3082, on compare cette donnée de charge à une valeur-seuil mémorisée dans l'ensemble contrôleur 5 en relation avec la valeur de l'identifiant de gestion considéré. Autrement dit, on détermine s'il est possible de stocker le paquet de données dans sa file respective sans dépasser une valeur limite propre à l'identifiant de gestion du paquet de données.

Si oui, le processus se poursuit par l'opération 306 décrite plus haut.

Sinon, à l'opération 3084, on détermine dans quelle mesure le paquet de données peut être stocké sans pénaliser le stockage de paquets de données associés à d'autres identifiants de gestion. Ceci revient à augmenter temporairement la valeur-seuil de stockage associée à l'identifiant de gestion du paquet de données en question, et à diminuer la valeur limite de stockage de paquets associés à un autre identifiant.

Si le stockage du paquet de données est possible, le processus se poursuit par l'évaluation de l'opération 306.

Sinon, le paquet en question est supprimé et le traitement recommence en 300.

La décision de stockage de l'opération 3084 fait l'objet de règles de gestion maintenues dans l'ensemble contrôleur 5. Ces règles peuvent être multiples. En général, ces règles sont déterminées de manière à optimiser l'occupation de la mémoire tampon, c'est-à-dire à éviter qu'un paquet de données ne soit pas stocké, et donc rejeté, alors que de l'espace de stockage reste disponible. Cependant, la décision visant à adapter la valeur-seuil de stockage d'un identifiant de gestion pour éviter le rejet d'un paquet de données peut entraîner le rejet d'un paquet de données associé à une autre valeur d'identifiant de gestion. L'établissement des règles de gestion fera donc l'objet d'un compromis et sera établi par l'administrateur du routeur après négociation avec ses différents clients sur les garanties de service offertes. Par exemple, une première valeur-seuil de stockage peut être assurée à un utilisateur, tandis qu'une seconde valeur-seuil, supérieure à la première, ne fait l'objet d'aucune garantie. La différence entre ces valeurs-seuils correspond à un espace de stockage qui peut être attribué en priorité à un utilisateur différent du routeur.

D'autre part, l'opération 3084 autorise une certaine flexibilité dans l'administration du routeur 1. À ce titre, elle reste optionnelle, et l'administrateur du routeur en question peut opter pour un partage strict de la quantité de mémoire tampon disponible, c'est-à-dire conduire au rejet d'un paquet de données pour dépassement de la valeur-seuil de stockage alors que de la mémoire tampon reste disponible.

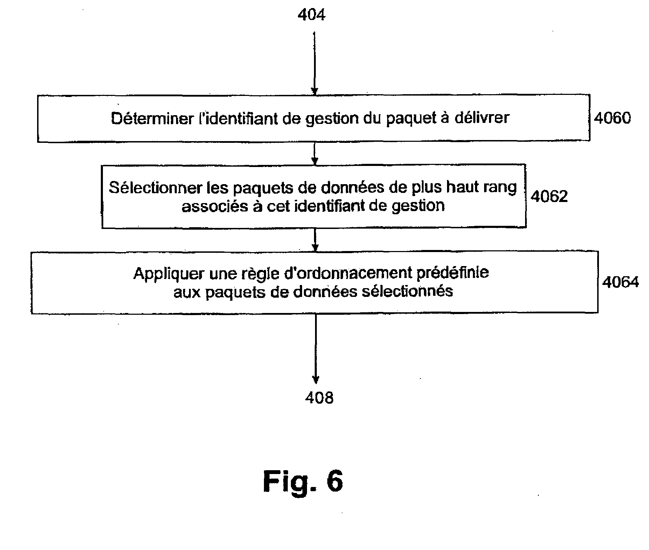

La figure 6 détaille l'opération 406 selon une première variante de réalisation de l'invention.

À l'opération 4060, on détermine l'identifiant de gestion du paquet à délivrer, en application de règles de gestion prédéfinies, maintenues dans l'ensemble contrôleur 5. Ces règles de gestion visent à répartir le travail de l'ordonnanceur de paquets entre les différentes valeurs de l'identifiant de gestion. Elles peuvent être multiples, et résulteront en général d'une négociation entre l'administrateur du routeur et les différents utilisateurs.

Le partage du travail de l'ordonnanceur peut être équitable, au sens où il délivre tour à tour un paquet de données pour chaque identifiant de gestion, ou une même quantité de données. Il peut être également pondéré par identifiant de gestion, ou encore systématiquement privilégier l'identifiant qui a la plus grande quantité de données en attente, ou qui présente la plus haute priorité. L'ordonnanceur peut également attendre la première date de sortie de paquets.

À l'opération 4062, on considère seulement les paquets associés à la valeur de l'identifiant de gestion déterminé à l'opération 4060.

À l'opération 4064, on applique des règles d'ordonnancement stockées en mémoire en relation avec la valeur de l'identifiant de gestion en question. Autrement dit, cette opération 4064 correspond à une étape de gestion d'un ordonnanceur classique dans un réseau. Par exemple, les règles d'ordonnancement peuvent comprendre une délivrance tour à tour, une délivrance pondérée, le choix systématique de la file d'attente la plus longue, ou autres.

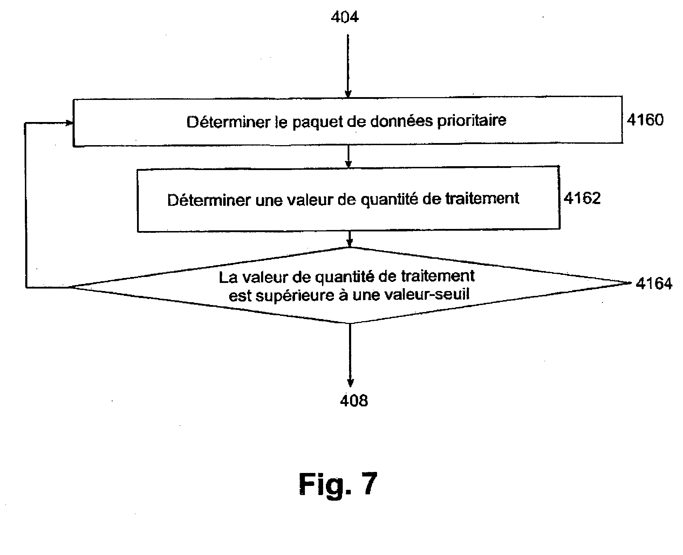

La figure 7 détaille l'opération 406 selon une seconde variante de réalisation de l'invention.

À l'opération 4160, on détermine le paquet de données le plus prioritaire en application des règles d'ordonnancement respectivement associées aux différentes valeurs de l'identifiant de gestion.

À l'opération 4162, on détermine une valeur de capacité de traitement par unité de temps prenant en compte la délivrance du paquet en question pour cette valeur de l'identifiant de gestion.

À l'opération 4164, on compare cette valeur à une valeur-seuil maintenue dans l'ensemble contrôleur 5 en relation avec l'identifiant de gestion en question.

Si cette valeur est inférieure à la valeur-seuil, alors le paquet de données est délivré. (Opération 406)

Sinon, on recommence l'étape 4160 en ignorant les paquets de données associés à la valeur de l'identifiant de gestion en question.

Les modes de réalisation des figures 6 et 7 ne constituent que des exemples, et d'autres variantes de réalisation peuvent être imaginées, en particulier à partir de ces exemples.

Ainsi par exemple, l'ordonnanceur peut être agencé pour délivrer les paquets de données indépendamment de la valeur de l'identifiant de gestion qui leur est associée, tout en maintenant un compte des quantités de données respectivement délivrées pour l'un et l'autre des identifiants de gestion. Dans ce cas, l'ordonnanceur peut modifier son mode de délivrance des paquets lorsque l'un des identifiants de gestion présente un compte supérieur à une valeur-seuil ou lorsque l'écart entre les comptes des différents identifiants devient trop important.

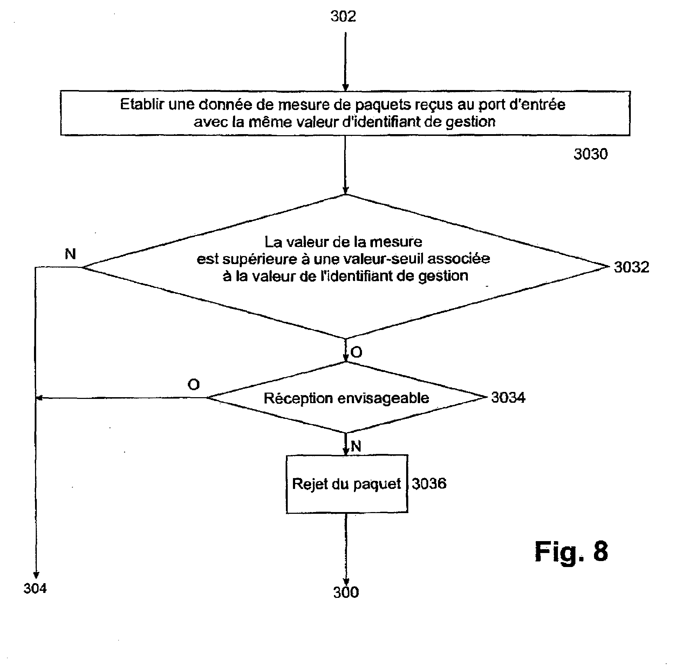

La figure 8 illustre une variante de réalisation du gestionnaire de file, qui se déduit du fonctionnement décrit en relation avec la figure 3 par l'intercalation d'une opération entre les opérations 302 et 304.

À l'opération 3030, on établit une donnée de mesure de paquets reçus avec la même valeur d'identifiant de gestion au port d'entrée considéré. Cette donnée de mesure peut correspondre à un débit, c'est-à-dire à une quantité de données par unité de temps, ou à une valeur de rafale, c'est-à-dire d'un nombre de paquets reçus par unités de temps, ou autres.

À l'opération 3032, on compare cette donnée de mesure à une valeur-seuil prédéterminée, mémorisée en relation avec la valeur de l'identifiant de gestion associé à ce paquet de données dans le contrôleur 5.

Si cette donnée de mesure est inférieure à la valeur-seuil, alors le processus se poursuit par l'opération 304.

Sinon, on détermine dans quelle mesure le paquet de données peut être accepté sans pénaliser les paquets de données qui arriveraient en association avec des valeurs différentes d'identifiants de gestion. Ceci fait appel à des règles de gestion analogues à ce qui a été décrit plus haut pour le partage d'une mémoire tampon.

S'il est possible d'accepter le paquet, alors le processus se poursuit par l'opération 304.

Sinon le paquet est rejeté (opération 3034).

Dans les modes de réalisation décrits ci-dessus, les paquets de données sont traités comme s'ils passaient au travers de routeurs distincts en fonction de la valeur d'identifiant de gestion qui leur est attribuée.

Autrement dit, le routeur 1 permet le fonctionnement simultané de plusieurs routeurs, que l'on peut qualifier de virtuels. Ces routeurs virtuels se partagent les ports du routeur physique, mais aussi ses capacités de traitement, ses mémoires tampon et son espace de stockage pour les données de gestion. Ces routeurs virtuels apparaissent donc isolés et indépendants les uns des autres.

La répartition des ressources physiques entre les différents routeurs virtuels peut être fixe ou au contraire flexible, selon les règles de gestion définies dans le contrôleur 5.

L'identifiant de gestion peut alors être vu comme un identifiant de routeur virtuel.

Chaque routeur virtuel est alors défini par un nombre de ports, la taille de la mémoire tampon associée à l'interconnexion de ces ports, les capacités de réception/émission de ces ports et/ou une ou plusieurs disciplines d'ordonnancement des paquets à délivrer.

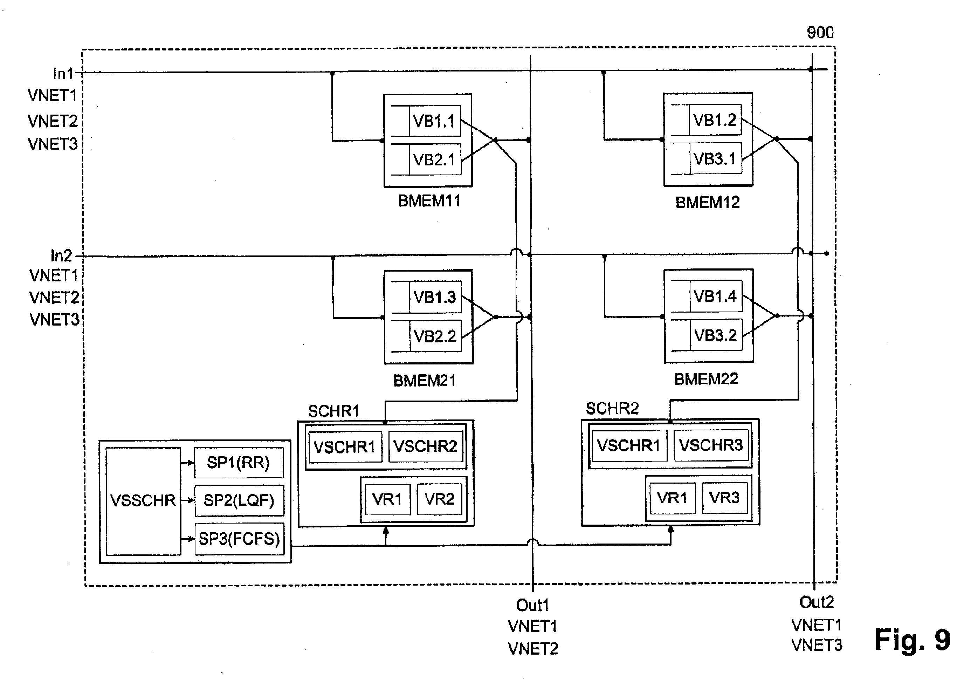

La figure 9 montre un routeur 900 réalisé à patir du routeur 1.

Le routeur 900 comprend deux ports d'entrée, respectivement In1 et In2, et deux ports de sortie, respectivement Out1 et Out2.

Chacun des ports Out1 et Out2 est connecté à la fois avec le port In1 et le port In2. À chaque fois de la mémoire tampon est associée à l'interconnexion entre une ligne d'entrée et une ligne de sortie.

Le routeur 900 est paramétré de manière à héberger trois routeurs virtuels, respectivement désignés VS1, VS2, et VS3.

En chacun des ports In1 et In2 peuvent être reçus des paquets de données en provenance de l'un des réseaux virtuels du groupe formé des réseaux VNET1, VNET2 et VNET3.

Au port Out1 peuvent être délivrés des paquets à destination des réseaux virtuels VNET1 et VNET2, tandis qu'au second port de sortie Out2 peuvent être délivrés des paquets à destination des réseaux virtuels VNET1 et VNET3.

Le routeur virtuel VS1 utilise ainsi les deux ports d'entrée In1 et In2 et les deux ports de sortie Out1 et Out2, tandis que chacun des routeurs virtuels VS2 et VS3 utilise les deux ports d'entrée In1 et In2 et un unique port de sortie, Out1 ou Out2.

Dans la mémoire BMEM11 sont maintenues deux files d'attente VB1.1 et VB2.2 appartenant respectivement au routeur VS1 et au routeur VS2. Dans la mémoire BMEM12 sont maintenues des files d'attente VB1.2 et VB3.1 appartenant respectivement au routeurs virtuels VS1 et VS3.

De manière analogue, la mémoire BMEM21 héberge une file d'attente VB1.3 et une file d'attente VB2.2 appartenant respectivement aux routeurs VS1 et VS2, tandis que dans la mémoire BMEM22 sont hébergées une file d'attente VB1.4 et une file d'attente VB3.2 appartenant respectivement aux routeurs VS1 et VS3.

Le premier ordonnanceur SCHR1 fait fonctionner un premier ordonnanceur virtuel, noté VSCHR1, et un second ordonnanceur virtuel, noté VSCHR2, appartenant respectivement au routeur virtuel VS1 et au routeur virtuel VS2.

De manière analogue, le second ordonnanceur SCHR2 fait fonctionner un premier ordonnanceur virtuel VSCHR1, appartenant au routeur virtuel VS1, et un troisième ordonnanceur virtuel VSCHR3, appartenant au routeur virtuel VS3.

Un ordonnanceur général, ou ordonnanceur de routeurs virtuels VSSCHR, sélectionne à chaque décision d'ordonnancement l'un des routeurs virtuels partageant un même port de sortie en appelant son module d'ordonnancement respectif.

Ce module d'ordonnancement respectif, à savoir VSCHR1 ou VSCHR2 pour le premier port de sortie Out1, et VSCHR1 ou VSCHR3 pour le second port de sortie Out2, sélectionne l'une des files d'attente associées au routeur virtuel VS et à la ligne de sortie auxquels il appartient, afin de sortir un paquet de la file d'attente en question.

Par exemple, lorsqu'une décision de délivrance doit être prise au port Out1, l'ordonnanceur général VSSCHR choisit entre l'ordonnanceur VSCHR1 et l'ordonnanceur VSCHR2. Si, par exemple, l'ordonnanceur VSCHR2 est sélectionné, ce dernier sélectionne un paquet parmi les paquets contenus dans la file d'attente VB2.1 et ceux de la file d'attente VB2.2.

Cette délivrance se fait selon des règles d'ordonnancement qui peuvent être propres à chacun des ordonnanceurs virtuels. Ici, le routeur 900, en réalité l'ensemble contrôleur 5 associé à ce routeur 900, maintient un ensemble de politiques d'ordonnancement que chacun des ordonnanceurs SCHR1 et SCHR2 peuvent appeler, conformément à la politique d'ordonnancement établie pour les routeurs virtuels correspondants. D'une certaine manière, ces politiques d'ordonnancement peuvent être vues elles-même comme des ordonnanceurs ou des modules d'ordonnancement.

Les politiques d'ordonnancement comprennent, par exemple, les politiques "round-robin" (politique SP1), ou à tour de rôle, "la plus longue file d'attente en premier", notée "LQF" pour "longuest queue first", ou encore "premier arrivé premier servi", noté FCFS pour "first come first serve".

L'ordonnanceur général VSSCHR, et l'ensemble des règles d'ordonnancement qui peuvent lui être associées, peuvent être stockés dans un module central dans la matrice d'interconnexion.

Chacun des ordonnanceurs SCHR1 ou SCHR2, lesquels agissent à la manière de processeurs, peut charger l'ordonnanceur général VSSCHR et une combinaison de règles d'ordonnancement afin de délivrer des paquets contenus dans les différentes files d'attente. En pratique, chacun des premier ordonnanceur SCHR1 et second ordonnanceur SCHR2 peut charger une instance de l'ordonnanceur général par un routeur virtuel.

Ici, un registre est en outre associé à chacun des ports de sortie Out1 et Out2 pour maintenir l'état de l'ordonnanceur associé, par exemple l'identité de la file d'attente ayant délivré le dernier paquet sorti.

Chacun des registres est divisé en un ensemble logique d'espaces isolés afin de maintenir séparément les états de chacun des routeurs virtuels VS1 à VS3.

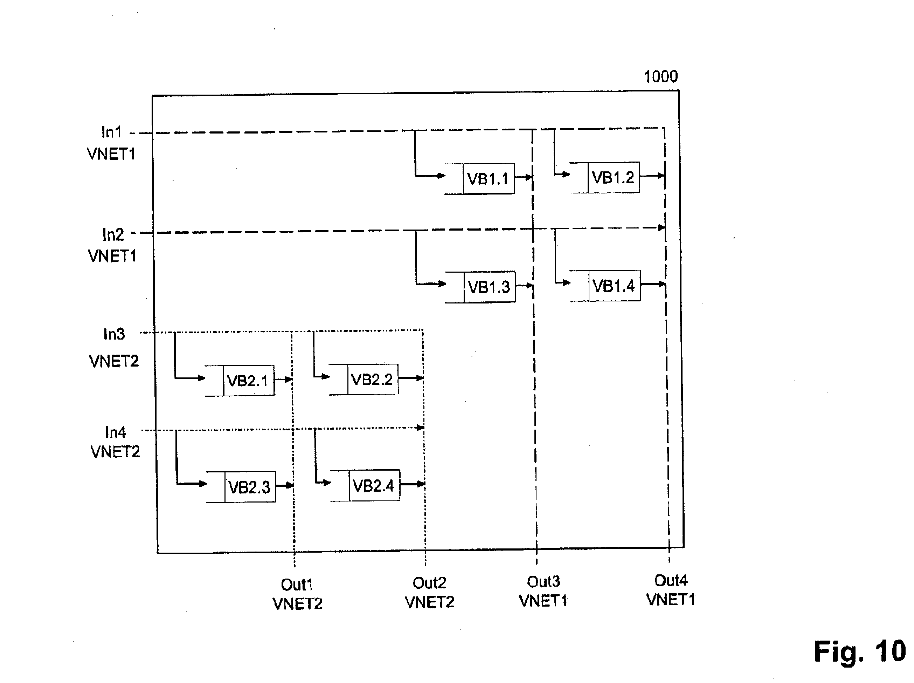

La figure 10 montre un routeur 1000 résultant de la configuration d'un routeur physique analogue au routeur 1 décrit plus haut, à quatre ports d'entrée et quatre ports de sortie.

Le routeur 1000 maintient ici deux routeurs virtuels VS1 et VS2 qui se partagent les ports d'entrée et de sortie.

Par exemple, les ports d'entrée In1 et In2 et de sortie Out3 et Out4 sont destinés à recevoir, et/ou à délivrer, des paquets du même réseau virtuel VNET1, tandis que les ports d'entrée In3 et In4 et les ports de sortie Out1 et Out2 sont destinés à recevoir, et/ou à délivrer des paquets d'un même réseau virtuel VNET2.

Dans cette configuration, le routeur 1000 isole parfaitement les données des réseaux VNET2 et VNET3. Cette configuration est appelée segmentation car aucun port physique et aucune mémoire tampon ne sont partagés. Chaque routeur virtuel possède des ordonnanceurs dédiés à ses ports dédiés, comme si plusieurs commutateurs/routeurs physiques étaient logés en un même boîtier.

On a décrit un routeur 1 capable de faire fonctionner plusieurs routeurs virtuels, de manière simultanée, avec une bonne isolation des données.

Le routeur 1 décrit plus haut présente une matrice d'interconnexion à mémoire tampon répartie aux différents points d'interconnexion. Cela comprend en tout premier lieu le cas d'une matrice d'interconnexion présentant physiquement un module mémoire dédié pour chacun des points d'interconnexion. Cela comprend également le cas où un ou plusieurs modules de mémoires seraient partagés entre ces différents points d'interconnexion.

Dans les modes de réalisation décrits, chacun du premier et du second ordonnanceur agit pour délivrer tour à tour des paquets associés à l'un ou l'autre des valeurs d'identifiant de gestion. Pour ces paquets, les règles de priorité peuvent dépendre de la valeur de l'identifiant. Autrement dit, le premier et le second ordonnanceur sont susceptibles d'appliquer des politiques d'ordonnancement différentes, selon la valeur de l'identifiant de gestion du paquet traité. Finalement, chacun du premier et du second ordonnanceur opère comme s'il exécutait plusieurs ordonnanceur, ou plusieurs modules d'ordonnancement, à tour de rôle, chaque ordonnanceur agissant pour une valeur particulière de l'identifiant de gestion. Lorsque le contrôleur détermine la valeur de l'identifiant de gestion du paquet à délivrer en un port de sortie, il agit comme s'il exécutait un ordonnanceur général déterminant lequel des modules d'ordonnancement doit opérer à un instant donné.

De manière analogue, un gestionnaire de file peut être vu comme exécutant en réalité plusieurs gestionnaires de files, ou modules de gestion de file, chacun de ces gestionnaires agissant pour une valeur particulière de l'identifiant de gestion. Là encore le rôle de l'ensemble contrôleur 5 peut être parfois assimilé à un ordonnanceur, général, déterminant lequel de ces modules de gestion de file doit opérer à un instant donné.

Finalement, l'ensemble contrôleur 5 peut être vu comme exécutant un ordonnanceur général répartissant les ressources physiques du routeur entre les différents routeurs virtuels hébergés dans ce routeur 1.

Pour des raisons de clarté, l'ensemble contrôleur 5 a été décrit et illustré comme étant monobloc. Cependant l'ensemble contrôleur 5 peut comprendre une pluralité de contrôleurs. En particulier, l'ensemble contrôleur 5 peut comprendre au moins un contrôleur par ligne d'entrée pour optimiser les performances. On a alors une architecture qui permet le fonctionnement en parallèle de ces contrôleurs. Ceci ne présente pas de difficulté technique majeure, contrairement aux routeurs/commutateurs de l'état de la technique. Les tâches de contrôle se trouvent ainsi distribuées.

L'invention n'est pas limitée aux modes de réalisation de l'invention décrits plus haut, mais englobe toutes les variantes que pourra envisager l'homme de l'art.

## Revendications

1. Dispositif de transmission de données numériques du type comprenant:
- au moins un port d'entrée (In1, In2) et des ports de sortie (Out1, Out2) destinés à respectivement recevoir et délivrer des paquets de données,
- une matrice d'interconnexion (3) reliant chaque port d'entrée (In1, In2) à chacun des ports de sortie (Out1, Out2) par l'intermédiaire d'une mémoire tampon respective (BMEM11, BMEM12, BMEM21, BMEM22),
- un contrôleur (5) pour la gestion des paquets de données à travers la matrice de commutation (3),
- des ordonnanceurs de paquets (SCHR1, SCHR2) organisant la délivrance des paquets de données en un port de sortie respectif (Out1, Out2), **caractérisé en ce que**:
- le contrôleur (5) est un ensemble contrôleur (5) qui maintient une structure de stockage de règles de gestion; y compris des règles de commutation/routage, en relation avec des identifiants de gestion, et comprend en outre un gestionnaire de file respectif pour chacun des ports d'entrée (In1, In2), chaque gestionnaire de file étant adapté pour, à chaque fois qu'un paquet de données est reçu à son port d'entrée respectif:
- déterminer une valeur d'identifiant de gestion pour ce paquet,
- interroger ladite structure de stockage avec ladite valeur d'identifiant de gestion pour déterminer le port de sortie du paquet,
- évaluer une condition de gestion portant sur le contenu du paquet de données et tirée des règles de gestion, et, en fonction du résultat de cette évaluation,
- associer le paquet de donnée à une file d'attente organisée dans la mémoire tampon correspondant au port de sortie dudit paquet en relation avec l'identifiant de gestion,
et **en ce que** chaque ordonnanceur (SCHR1, SCHR2) est adapté pour:
- délivrer les paquets de données en son port de sortie (Out1, Out2) respectif dans un ordre déterminé d'après l'évaluation d'une condition de gestion supplémentaire, tirée des règles de gestion, prenant en compte la valeur de l'identifiant de gestion associé à chacun des paquets des données à délivrer.

2. Dispositif selon la revendication 1, dans lequel la condition de gestion porte également sur le contenu des paquets de données stockés dans la file d'attente correspondante au port de sortie du paquet en association avec la valeur de l'identifiant de gestion du paquet en question.

3. Dispositif selon la revendication 2, dans lequel l'évaluation de la condition de gestion comprend une comparaison du contenu desdits paquets de données stockés et dudit paquet à une valeur-seuil associée à l'identifiant de gestion desdits paquets de données stockés et dudit paquet.

4. Dispositif selon l'une des revendications précédentes, dans lequel la condition de gestion porte au moins en partie sur une taille du paquet de données.

5. Dispositif selon l'une des revendications précédentes, dans lequel chaque gestionnaire de files est adapté pour maintenir dans chacune des mémoires tampon associées à son port d'entrée une file d'attente respective pour les paquets de données ayant une même valeur d'identifiant de gestion.

6. Dispositif selon la revendication 5, dans lequel chaque gestionnaire de files maintient autant de files d'attente que de valeurs d'identifiant de gestion différentes susceptibles d'être attribuées à un paquet reçu au port d'entrée associé à ce gestionnaire de files.

7. Dispositif selon l'une des revendications précédentes, dans lequel ledit paquet de données est stocké avec un rang de sortie relatif, déterminé en application de règles de priorité stockées par l'ensemble contrôleur (5) en relation avec la valeur de l'identifiant de gestion dudit paquet de données.

8. Dispositif selon l'une des revendications précédentes, dans lequel chaque ordonnanceur (SCHR1, SCHR2) est adapté pour délivrer les paquets de données indépendamment de la file d'attente dans laquelle sont stockés les paquets de données.

9. Dispositif selon l'une des revendications précédentes, dans lequel chaque ordonnanceur (SCHR1, SCHR2) est adapté pour, une fois déterminée la valeur de l'identifiant de gestion du paquet à délivrer, délivrer un paquet de l'une des files d'attentes correspondantes, en application de règles de priorités, maintenues en relation avec cette valeur de l'identifiant de gestion.

10. Dispositif selon l'une des revendications précédentes, dans lequel chaque ordonnanceur (SCHR1, SCHR2) est adapté pour déterminer la valeur de l'identifiant de gestion du paquet à délivrer en application de règles de priorité prédéfinies.

11. Dispositif selon l'une des revendications 1 à 10 , dans lequel l'ensemble contrôleur 5 exécute un ordonnanceur général (VSSCHR) déterminant, pour chacun des ordonnanceurs de paquet (SCHR1, SCHR2), la valeur de l'identifiant de gestion du paquet à délivrer, en application de règles de priorité prédéfinies.

12. Dispositif selon l'une des revendications précédentes, dans lequel l'évaluation de ladite condition de gestion et/ou de ladite condition de gestion supplémentaire comprend l'évaluation, pour l'identifiant de gestion en question, de l'une au moins des grandeurs du groupe formé d'une taille cumulée de paquets traités, une taille cumulée de paquets traités par unité de temps, un nombre de paquets traités et un nombre de paquets traités par unité de temps.

13. Dispositif selon l'une des revendications précédentes, dans lequel le contrôleur maintient un ensemble de règles de priorité pour la délivrance de paquets de données appartenant à des files d'attentes différentes, et dans lequel chaque ordonnanceur de paquet (SCHR1, SCHR2) est agencé pour évaluer l'une de ces règles, après détermination de la valeur de l'identifiant de gestion du paquet à délivrer, en application des règles de gestion maintenues en relation avec cette valeur de l'identifiant de gestion.

14. Dispositif selon l'une des revendications précédentes, dans lequel l'ensemble contrôleur (5) comprend une pluralité de contrôleurs, chacun de ces contrôleur étant associé à l'un, respectif, des ports d'entrée (In1, In2).

15. Procédé de transmission de données numériques comprenant les étapes suivantes:
a. recevoir des paquet de données en au moins un port d'entrée (In1, In2),
b. identifier un port de sortie (Out1, Out2) respectif pour chaque paquet de données en application de règles de gestion prédéterminées,
c. placer chaque paquet de données dans une file d'attente maintenue entre le port d'entrée et le port de sortie identifié à l'étape b),
d. délivrer, en chacun des ports de sortie (Out1, Out2), les paquets de données des files d'attentes reliées à ce port de sortie, de manière organisée selon un ordre prédéterminé,
**caractérisé en ce que**
l'étape b. comprend les étapes suivantes:
b1. déterminer une valeur d'identifiant de gestion respectif pour chaque paquet de données,
b2. appliquer des règles de gestion, y compris des règles de commutation/routage, relatives à l'identifiant de gestion déterminé à l'étape b1,
l'étape c comprend les étapes suivantes:
c1. évaluer, pour chaque paquet de données, une condition de gestion portant sur le contenu de ce paquet de données et tirée des règles de gestion relatives à son identifiant de gestion,
c2. associer, en fonction du résultat de l'évaluation de l'étape c1, le paquet de donnée à une file d'attente organisée dans la mémoire tampon correspondant au port de sortie en relation avec l'identifiant de gestion,
l'étape d comprend les étapes suivantes:
d1. évaluer, pour chacun des paquets des données à délivrer, une condition de gestion supplémentaire, tirée des règles de gestion, prenant en compte la valeur de l'identifiant de gestion,
d2. déterminer un ordre de sortie respectif des desdits paquets de données d'après l'évaluation de l'étape d1.

## Patentansprüche

1. Vorrichtung zur Übertragung digitaler Daten, des Typs aufweisend:
- wenigstens einen Eingangsport (In1, In2) und Ausgangsports (Out1, Out2), die dazu bestimmt sind, um jeweils Datenpakete zu empfangen oder zu senden,
- eine Verbindungsmatrix (3), die jeden Eingangsport (In1, In2) mit jedem der Ausgangsports (Out1, Out2) verbindet über die Zwischenschaltung eines jeweiligen Pufferspeichers (BMEM11, BMEM12, BMEM21, BMEM22),
- eine Steuereinrichtung (5) für das Management der Datenpakete durch die Vermittlungsmatrix (3) hindurch,
- Pakete-Zuweisungseinrichtungen (SCHR1, SCHR2), die die Sendung der Datenpakete über einen jeweiligen Ausgangsport (Out2, Out2) organisieren, **dadurch gekennzeichnet, dass**:
- die Steuereinrichtung (5) eine Steuereinheit (5) ist, welche eine Speicherstruktur von Managementregeln, worin Vermittlungs-/Routing-Regeln enthalten sind, in Bezug auf Management-Identifikationen hält, und welche ferner eine Dateiverwaltungseinrichtung jeweilig für jeden Eingangsport (In1, In2) aufweist, wobei jede Dateiverwaltungseinrichtung eingerichtet ist, um jedes Mal, wenn ein Datenpaket an seinem jeweiligen Eingangsport empfangen wird,:
- einen Management-Identifikationswert für dieses Paket zu ermitteln,
- die Speicherstruktur mit dem Management-Identifikationswert anzufragen zum Ermitteln des Paket-Ausgangsports,
- eine Managementbedingung zu Berechnen, die sich auf den Inhalt des Datenpakets bezieht und die aus den Managementregeln gezogen ist, und, in Funktion des Resultats dieser Berechnung,
- das Datenpaket einer Pufferdatei zuzuordnen, die im Pufferspeicher organisiert ist, korrespondierend zu dem Ausgangsport des Pakets in Bezug auf die Managementidentifikation,
und dadurch, dass jede Zuweisungseinrichtung (SCHR1, SCHR2) eingerichtet ist, um:
d ie Datenpakete über ihren jeweiligen Ausgangsport (Out1, Out2) in einer bestimmten Reihenfolge zu senden nach der Berechnung einer Zusatz-Managementbedingung, die aus den Managementregeln gezogen ist, unter Berücksichtigung des Management-Identifikationswerts, der jedem der zu sendenden Datenpakete zugeordnet ist.

2. Vorrichtung gemäß Anspruch 1, bei welcher die Managementbedingung sich auch auf den Inhalt der Datenpakete bezieht, die in der Pufferdatei gespeichert sind korrespondierend zu dem Ausgangsport des Pakets im Zusammenhang mit dem Management-Identifikationswert des betreffenden Pakets.

3. Vorrichtung gemäß Anspruch 2, bei welcher die Berechnung der Management-Bedingung aufweist einen Vergleich des Inhalts der gespeicherten Datenpakete und des Pakets mit einem unteren Grenzwert, der mit der Management-Identifikation der gespeicherten Datenpakete und des Pakets zusammenhängt.

4. Vorrichtung gemäß einem der vorhergehenden Ansprüche, bei welcher die Management-Bedingung sich zumindest teilweise auf eine Größe des Datenpakets bezieht.

5. Vorrichtung gemäß einem der vorhergehenden Ansprüche, bei welcher jede Dateiverwaltungseinrichtung eingerichtet ist, um in jedem der Pufferspeicher, die ihrem Eingangsport zugeordnet ist, eine Pufferdatei zu halten jeweilig für die Datenpakete, die einen gleichen Management-Identifikationswert haben.

6. Vorrichtung gemäß Anspruch 5, bei welcher jede Dateiverwaltungseinrichtung genauso viele Pufferdateien hält wie es unterschiedliche Management-Identifikationswerte gibt, die in der Lage sind, einem Paket zugeordnet zu werden, das am Eingangsport empfangen wird, der dieser Dateiverwaltungseinrichtung zugeordnet ist.

7. Vorrichtung gemäß einem der vorhergehenden Ansprüche, bei welcher das Datenpaket mit einem relativen Ausgangsrang gespeichert wird, der ermittelt ist in Anwendung von gespeicherten Prioritätsregeln durch die Steuereinheit (5) in Bezug auf den Management-Identifikationswert des Datenpakets.

8. Vorrichtung gemäß einem der vorhergehenden Ansprüche, bei welchem jede Zuweisungseinrichtung (SCHR1, SCHR2) eingerichtet ist, um die Datenpakete unabhängig von der Pufferdatei zu senden, in welcher die Datenpakete gespeichert sind.

9. Vorrichtung gemäß einem der vorhergehenden Ansprüche, bei welcher jede Zuweisungseinrichtung (SCHR1, SCHR2) eingerichtet ist, um ein Mal den Management-Identifikationswert des zu sendenden Pakets ermittelt, in Anwendung der Prioritätsregeln ein Paket von einer der korrespondierenden Pufferdateien zu senden, die in Bezug auf diesen Management-Identifikationswert gehalten sind.

10. Vorrichtung gemäß einem der vorhergehenden Ansprüche, bei welcher jede Zuweisungseinrichtung (SCHR1, SCHR2) eingerichtet ist, um den Management-Identifikationswert des zu sendenden Pakets zu ermitteln in Anwendung von vordefinierten Prioritätsregeln.

11. Vorrichtung gemäß einem der Ansprüche 1 bis 10, bei welcher die Steuereinheit 5 eine allgemeine Zuweisungseinrichtung (VSSCHR) ansteuert, ermittelnd, für jede Paket-Zuweisungseinrichtung (SCHR1, SCHR2), den Management-Identifikationswert des zu liefernden Pakets in Anwendung von vordefinierten Prioritätsregeln.

12. Vorrichtung gemäß einem der vorhergehenden Ansprüche, bei welcher die Berechnung der Managementbedingung und/oder der Zusatz-Managementbedingung aufweist die Berechnung, für die betreffende Management-Identifikation, von wenigstens einer der Größen der Gruppe, die gebildet ist von der kumulierten Größe der behandelten Pakete, einer Anzahl der behandelten Pakete und einer Anzahl der behandelten Pakete pro Zeiteinheit.

13. Vorrichtung gemäß einem der vorhergehenden Ansprüche, bei welcher die Steuereinrichtung eine Gruppe von Prioritätsregeln hält für die Sendung von Datenpaketen zugehörig zu unterschiedlichen Pufferdateien, und bei welcher jede Paket-Zuweisungseinrichtung (SCHR1, SCHR2) eingerichtet ist zum Berechnen einer dieser Regeln nach Ermittlung des Management-Identifikationswerts des zu sendenden Pakets in Anwendung der Management-Regeln, die in Bezug auf diesen Management-Identifikationswert gehalten sind.

14. Vorrichtung gemäß einem der vorhergehenden Ansprüche, bei welchem die Steuereinheit (5) eine Mehrzahl von Steuereinrichtungen (5) aufweist, wobei jede dieser Steuereinrichtungen jeweilig einem der Eingangsports (IN1, In2) zugeordnet ist.

15. Verfahren zum Übertragen von digitalen Daten, aufweisend die folgenden Schritte:
a. Empfangen von Datenpaketen über wenigstens einen Eingangsport (In1, In2),
b. Identifizieren eines Ausgangsports (Out1, Out2) jeweilig für jedes Datenpaket in Anwendung von vorbestimmten Managementregeln,
c. Platzieren jedes Datenpakets in einer Pufferdatei, die zwischen dem Eingangsport und dem Ausgangsport, der in Schritt b) identifiziert wurde, gehalten ist,
d. Senden, über jeden der Ausgangsports (Out1, Out2), die Datenpakete der Pufferdateien, die diesem Ausgangsport zugeordnet sind, in organisierter Weise gemäß einer vorbestimmten Reihenfolge,
**dadurch gekennzeichnet, dass**
der Schritt b. aufweist die folgenden Schritte:
b1. Ermitteln eines Management-Identifikationswerts jeweilig für jedes Datenpaket,
b2. Anwenden von Managementregeln, worin Vermittlungs-/Routing-Regeln enthalten sind, bezüglich des im Schritt b1 ermittelten Management-Identifikationswerts,
der Schritt c aufweist die folgenden Schritte:
c1. Berechnen, für jedes Datenpaket, einer Managementbedingung, die sich auf den Inhalt dieses Datenpakets bezieht und die aus den Managementregeln bezüglich dessen Management-Identifikation gezogen sind,
c2. Zuordnen, in Funktion des Resultats der Berechnung von Schritt c1, des Datenpakets zu einer Pufferdatei, die im Pufferspeicher organisiert ist, korrespondierend zu dem Ausgangsport in Bezug auf die Management-Identifikation,
der Schritt d aufweist die folgenden Schritte:
d1. Berechnen, für jedes der zu sendenden Datenpakete, eine Zusatz-Managementbedingung, die aus den Managementregeln gezogen ist, unter Berücksichtigung des Management-Identifikationswerts,
d2. Ermitteln einer jeweiligen Ausgangsreihenfolge der Datenpakete nach der Berechnung von Schritt d1.

## Claims

1. A device for transmitting digital data of the type comprising
- at least one input port (In1, In2) and output ports (Out1, Out2) respectively intended to receive and deliver data packets,
- an interconnection matrix (3) for linking each input port (In1, In2) with each of the output ports (Out1, Out2) with interposition of a respective buffer memory (BMEM11, BMEM12, BMEM21, BMEM22),
- a controlled (5) for managing the data packets through the switching matrix (3),
- packet schedulers (SCHR1, SCHR2) organizing the delivery of the data packets to a respective output port (Out1, Out2), **characterized in that**
- the controller (5) is a controller assembly (5) that maintains a management rules storage structure, including switching/routing rules, related to management identifiers, and also comprises a respective queue manager for each of the input ports (In1, In2), each queue manager being adapted so as, once a data packet is received at its respective input port,
- to determine a management identifier value for that packet,
- to query said storage structure with said management identifier value to determine the output port of the packet,
- to evaluate a management condition related to the content of the data packet and taken from the management rules, and, depending on the result of that evaluation,
- to associate the data packet with a queue organized in the buffer memory corresponding to the output port of said packet in relation to the management identifier,
and **in that** each scheduler (SCHR1, SCHR2) is adapted to
- deliver the data packets to its respective output port (Out1, Out2) in a predetermined order according to the evaluation of an additional management condition, drawn from the management rules, taking into account the value of the management identifier associated with each of the data packets to be delivered.

2. The device according to claim 1, wherein the management condition also pertains to the content of the data packets stored in the corresponding queue at the output port of the packets associated with the value of the management identifier of the packet in question.

3. The device according to claim 2, wherein the evaluation of the management condition comprises comparing the content of said stored data packets and said packet to a threshold value associated with the management identifier of said stored data packets and said packet.

4. The device according to one of the preceding claims, wherein the management condition at least partially pertains to a size of the data packet.

5. The device according to one of the preceding claims, wherein each queue manager is adapted to maintain, in each of the buffer memories associated with its input port, a respective queue for data packets having a same management identifier value.

6. The device according to claim 5, wherein each queue manager maintains as many queues as there are different management identifier values that may be assigned to a packet received at the input port associated with that queue manager.

7. The device according to one of the preceding claims, wherein said data packet is stored with a relative output rank, determined by applying priority rules stored by the controller assembly (5) in relation with the value of the management identifier of said data packet.

8. The device according to one of the preceding claims, wherein each scheduler (SCHR1, SCHR2) is adapted to deliver the data packets independently of the queue in which the data packets are stored.

9. The device according to one of the preceding claims, wherein each scheduler (SCHR1, SCHR2) is adapted so as, once the value of the management identifier of the packet to be delivered is determined, to deliver a packet from one of the corresponding queues, by applying priority rules, maintained in relation with that value of the management identifier.

10. The device according to one of the preceding claims, wherein each scheduler (SCHR1, SCHR2) is adapted to determine the value of the management identifier of the packet to be delivered by applying predefined priority rules.

11. The device according to one of claim 1 to 10, wherein the controller assembly executes a general scheduler (VSSCHR) determining, for each of the packet schedulers (SCHR1, SCHR2), the value of the management identifier for the packet to be delivered, by applying predefined priority rules.

12. The device according to one of the preceding claims, wherein the evaluation of said management condition and/or said additional management condition comprises the evaluation, for the management identifier in question, of at least one of the sizes of the group formed by a cumulative size of processed packets, a cumulative size of processed packets per unit of time, a number of packets processed and a number of packets processed per unit of time.

13. The device according to one of the preceding claims, wherein the controller maintains a set of priority rules for the delivery of data packets belonging to different queues, and each packet scheduler (SCHR1, SCHR2) is arranged to evaluate one of those rules, after determining the value of the management identifier of the packet to be delivered, by applying management rules maintained in relation with that value of the management identifier.

14. The device according to one of the preceding claims, wherein the controller assembly (5) comprises a plurality of controllers, each of said controllers being associated with a respective one of the input ports (In1, In2).

15. A method for transmitting digital data comprising the following steps:
a. receiving data packets at least at one input port (In1, In2),
b. identifying a respective output port (Out1, Out2) for each data packet by applying predetermined management rules,
c. placing each data packet in a queue maintained between the input port and the output port identified in step b),
d. delivering, at each of the output ports (Out1, Out2), the data packets of the queues linked to that output port, in a manner organized following a predetermined order, cha
racterized in that
step b. comprises the following steps:
b.1 determining a respective management identifier value for each data packet,
b.2 applying management rules, including switching/routing rules, relative to the management identifier determined in step b1,
step c. comprises the following steps:
c.1 evaluating, for each data packet, a management condition pertaining to the content of that data packet and drawn from management rules relative to its management identifier,
c.2 associating, as a function of the results of the evaluation step c1, the data packet with a queue organized in the buffer memory corresponding to the output port in relation with the management identifier,
step d. comprises the following steps:
d.1 evaluating, for each of the data packets to be delivered, an additional management condition, drawn from the management rules, taking the value of the management identifier into account,
d.2 determining a respective output order of said data packets according to the evaluation of step d1.
